Europäisches Patentamt

(19) European Patent Office

Office européen des brevets

(11) Veröffentlichungsnummer: **0 128 466 B1**

(12) **EUROPÄISCHE PATENTSCHRIFT**

(45) Veröffentlichungstag der Patentschrift:
27.09.89

(21) Anmeldenummer: **84106212.8**

(22) Anmeldetag: **30.05.84**

(51) Int. Cl.⁴: **H 01 B 7/28**

(54) **Elektrische Isolierungen und Kabel mit dieser Isolierung.**

(30) Priorität: **13.06.83 DE 3321268**

(43) Veröffentlichungstag der Anmeldung:
**19.12.84 Patentblatt 84/51**

(45) Bekanntmachung des Hinweises auf die Patenterteilung:
**27.09.89 Patentblatt 89/39**

(84) Benannte Vertragsstaaten:
**AT BE CH DE FR GB IT LI NL SE**

(56) Entgegenhaltungen:
**EP-A- 0 057 286**

(73) Patentinhaber: **Siemens Aktiengesellschaft,
Wittelsbacherplatz 2, D-8000 München 2 (DE)**

(72) Erfinder: **Henkel, Hans-Joachim, Dr.,
Philip-Reis-Strasse 34, D-8520 Erlangen (DE)**
Erfinder: **Müller, Norbert, Dr., von Hauck-Strasse 15b,
D-8522 Herzogenaurach (DE)**

## Beschreibung

Die Erfindung betrifft elektrische Isolierungen auf Polyolefinbasis, insbesondere bei Kabeln und Leitungen, für Mittel- und Hochspannung ab ca. 10 kV mit einem Zusatz zur Verhinderung der Bildung von Wasserbäumchen.

In elektrisch beanspruchten Polyolefinisolierungen können Vorgänge ablaufen, die als «electrochemical treeing» (ECT) oder «water treeing» bezeichnet werden. Diese Vorgänge, die insbesondere im Hinblick auf die Betriebssicherheit kunststoffisolierter Mittel- und Hochspannungskabel von Bedeutung sind, führen zur Entstehung von bäumchenartigen Gebilden, den sogenannten ECT-Strukturen.

Das optische Erscheinungsbild von ECT-Strukturen, die nach geeigneter Anfärbung besonders kontrastreich und detailliert sichtbar sind, ist sehr vielfältig. Grundsätzlich unterscheidet man zwischen zwei Formen:

– «vented trees», die von der Oberfläche der Isolierung ausgehen und sich in die Isolierung hinein erstrecken, und

– «bow-tie trees», die im Inneren der Isolierung entstehen.

Der Mechanismus der ECT-Bildung ist bislang nicht geklärt. Allgemein wird aber angenommen, daß für die Bildung der ECT-Strukturen ein elektrisches Feld und die Anwesenheit einer polaren Flüssigkeit, insbesondere von Wasser, erforderlich ist; die ECT-Strukturen werden deshalb auch als Wasserbäumchen bezeichnet. Die Initiierungsorte der Wasserbäumchen scheinen immer Störstellen zu sein, wie Verunreinigungen, aggregierte Beimischungen, Hohlräume, Spalte, Risse oder Grenzflächen, von denen jedoch jeweils nur ein Teil zur Bildung von Wasserbäumchen führt. Von den Störstellen aus, die bei im großtechnischen Maßstab hergestellten Isolierungen nicht vollständig vermieden werden können, erstrecken sich die bäumchenartigen Strukturen in Richtung des elektrischen Feldes.

Da ECT-Strukturen lokale Veränderungen des Isoliermaterials darstellen, können sie eine Schädigung der Isolierung bewirken, insbesondere im Hinblick auf die elektrische Durchschlagsfestigkeit. Es sind deshalb bereits zahlreiche Versuche unternommen worden, um das Wachstum von Wasserbäumchen zu verhindern oder zumindest zu verzögern.

Eine der Maßnahmen zur Verhinderung der Bildung von Wasserbäumchen besteht darin, die Isolierschicht mit einer metallischen Umhüllung bzw. Ummantelung, beispielsweise aus Blei oder Aluminium, zu versehen. Kabel mit einer derartigen Wasserabschirmschicht sind aber nicht nur kostspieliger, sondern auch schwerer und deshalb auch schwieriger handzuhaben als Kabel ohne eine Metallhülle.

Aus diesem Grunde ist deshalb bereits versucht worden, die Bildung von ECT-Strukturen durch die Zugabe von Additiven zur Isolierschicht (oder angrenzenden Schichten) zu unterbinden. Aus der Vielzahl der dabei eingesetzten Verbindungen seien beispielhaft genannt: Bleistearat (DE-OS 2 425 760 bzw. GB-PS 1 473 867), Natriumchlorid und -sulfat oder andere starke Eektrolyte (DE-AS 2 537 283 bzw. US-PS 4 042 776), stabile Hydrate bildende Salze, wie Calcium- und Magnesiumchlorid, und basische Anhydride (DE-OS 2 817 804 bzw. GB-PS 1 584 501), Silicagel und Phosphorpentoxid (DE-OS 2 754 336), Organosilane (US-Patentschriften 4 144 202, 4 212 756 und 4 263 158 sowie DE-OS 2 805 875), Bleioxide und basische Bleiverbindungen (DE-OS 2 523 844 und DE-OS 2 806 752), organische Isocyanate (US-PS 4 282 333), auf das Polymermaterial aufgepfropfte Silanverbindungen (DE-OS 2 935 224) und Metallkomplexe von Diketonen, Salicylsäure oder Schiffschen Basen (EP-A1-0 027 300).

Andererseits und konträr zu den Vorschlägen, salzartige Verbindungen bzw. Elektrolyte zuzusetzen, ist aber auch schon vorgeschlagen worden, den Gehalt der Isolierung an darin fein verteilten wasserlöslichen und/oder hygroskopischen Salzen unter einem Wert von $10^{-1}$ ppm und vorzugsweise unter $10^{-4}$ ppm zu halten (DE-OS 2 911 756).

Offensichtlich haben aber alle diese Maßnahmen, die sich darüber hinaus zum Teil auch widersprechen, noch nicht den erwünschten Erfolg gebracht. Denn so findet sich in einem Bericht über die Cigré, d.h. die Internationale Hochspannungskonferenz, von 1980 der Hinweis (siehe: «Kunststoffe» 71, 1981, Seite 448ff), daß empfohlen wurde, bei (Hochspannungs-)Kabeln einen wasserdichten Metallschirm aufzubringen, um das Eindringen von Feuchtigkeit zu verhindern.

Aufgabe der Erfindung ist es, bei elektrischen Isolierungen der eingangs genannten Art die Bildung von Wasserbäumchen durch geeignete Zusätze wirksam und dauerhaft zu unterbinden, so daß auf aufwendige Maßnahmen, wie Metallmäntel, verzichtet werden kann. Dies wird erfindungsgemäß dadurch erreicht, daß die elektrischen Isolierungen als Zusatz wenigstens ein Alkoholat von Magnesium, Calcium oder Aluminium enthalten.

Gegenstand der Erfindung sind ferner Kabel und Leitungen für Mittel- und Hochspannung ab ca. 10 kV mit einer einen Zusatz zur Verhinderung der Bildung von Wasserbäumchen enthaltenden elektrischen Isolierung auf Polyolefinbasis, die dadurch gekennzeichnet sind, daß die elektrische Isolierung als Zusatz wenigstens ein Alkoholat von Magnesium, Calcium oder Aluminium enthält.

Die in den erfindungsgemäßen Isolierungen enthaltenen Metallalkoholate (von Mg, Ca und Al) sind hydrolysierbare Verbindungen folgender Struktur: $Mg(OR)_2$, $Ca(OR)_2$ und $Al(OR)_3$; R steht dabei für den aus dem entsprechenden Alkohol (ROH) stammenden organischen Rest. Die Reste R, die gleich oder verschieden sein können, haben vorzugsweise folgende Bedeutung: Alkyl (n- oder Isoalkyl) mit 1 bis 24 C-Atomen, Cycloalkyl, insbesondere Cyclohexyl, oder Alkaryl, wie Benzyl.

Mittels der erfindungsgemäßen Zusätze kann einerseits die ECT-Bildung in elektrischen Isoliermaterialien unterdrückt werden, andererseits wird durch diese Verbindungen das Angebot an wirksamen Zusätzen erweitert. Dieses Angebot besteht bislang in Barbitursäure bzw. 2-Thiobarbitursäure und Derivaten davon (deutsche Offenlegungsschrift 3 202 828), in wasserlöslichen Alkali- oder Erdalkaliphosphaten und hydrolysierbaren Phosphorsäureestern (deutsche Offenlegungsschrift 3 202 896) sowie in Stoffen mit einer bestimmten Partikelgröße, welche für Schwermetallionen adsorptionsaktiv sind oder Schwermetalle im Ionenaustausch binden, wie pyrogene und/oder gefällte Kieselsäuren sowie Aluminiumoxide bzw. -oxidhydrate und Aluminiumsilicate (deutsche Patentanmeldung Akt.Z. P 3 318 988.9 – VPA 83 P 3159 DE).

Aus der EP-A2-0 057 286 ist eine Zusammensetzung bekannt, die keinen zugesetzten mineralischen Füllstoff aufweist, und die ein Ethylenpolymeres und ein Organotitanat in einer Menge enthält, die ausreicht, um die ECT-Resistenz zu verbessern. Die Wirkung der Titanate – Ti(OR)$_4$ – wird dabei so erklärt, daß diese hydrolysieren und dabei Alkohole liefern; die Alkohole wiederum fungieren dann als Inhibitor bei der Bildung von Wasserbäumchen. Die Titanate sind also eine Art Depotform für den ECT-Inhibitor Alkohol.

Im Gegensatz dazu kommt bei den erfindungsgemäßen Isolierungen den durch Hydrolyse aus den Alkoholaten entstehenden Hydroxiden (von Mg, Ca und Al) eine entscheidende Bedeutung zu. Diese Hydroxide umhüllen nämlich vermutlich in der Isolierung vorhandene Verunreinigungen, die die ECT-Bildung verursachen, kolloidal und unterbinden somit die ECT-Bildung. Es hat sich nun überraschenderweise gezeigt, daß diese Wirkung gerade dann erzielt wird, wenn Alkoholate von Metallen der 2. und 3. Hauptgruppe des Periodensystems der Elemente eingesetzt werden, und zwar Alkoholate von Magnesium, Calcium und Aluminium.

Außer in Kabeln und Leitungen können die erfindungsgemäßen elektrischen Isolierungen auch in Muffen und in Garnituren Verwendung finden. Als Grundlage dienen bei diesen Isoliermaterialien Polyolefine, und zwar vernetzte oder unvernetzte Materialien. Insbesondere finden in den erfindungsgemäßen Isolierungen Polyethylen (PE) und vernetztes Polyethylen (VPE) Verwendung. Daneben können aber auch Ethylen-Copolymere, wie Ethylen-Propylen-Copolymere (EPR), Ethylen-Vinylacetat-Copolymere (EVA) und Ethylen-Alkylacrylat-Copolymere (beispielsweise Ethylen-Ethylacrylat- und -Butylacrylat-Copolymere), bzw. Ethylen-Propylen-Dien-Terpolymere und Gemische (Blends) dieser Ethylen-Copolymere und -Terpolymere mit Polyolefinen, insbesondere Polyethylen und Polypropylen, eingesetzt werden. Die genannten Polymeren bzw. Polymergemische können, wie bereits erwähnt, sowohl vernetzt als auch unvernetzt zum Einsatz kommen. Die Vernetzung erfolgt dabei vorzugsweise peroxidisch oder durch energiereiche Strahlen. Die Isoliermaterialien können gegebenenfalls auch mit Oxidationsstabilisatoren versehen sein.

Der Anteil der Zusätze beträgt etwa zwischen 0,05 und 10 Gew.-%, bezogen auf das Gesamtgewicht der elektrischen Isolierung. Bei Kabeln und Leitungen können die Alkoholate der eigentlichen Isolierschicht als auch den feldbegrenzenden Schichten, d.h. der inneren und/oder äußeren Leitschicht, zugesetzt werden. Die Zusätze können dabei in einer Schicht oder in sämtlichen Schichten vorhanden sein. Vorzugsweise beträgt der Anteil der Zusätze etwa 0,1 bis 5 Gew.-%. Bevorzugt werden Aluminiumalkoholate eingesetzt.

Anhand von Ausführungsbeispielen soll die Erfindung noch näher erläutert werden.

Zum Nachweis der Verminderung der Bildung von Wasserbäumchen wurden aus hochreinem, unstabilisiertem thermoplastischem Polyethylen niederer Dichte (LDPE) 3 mm dicke Platten – mit und ohne Zusatz – hergestellt. Zur Herstellung von erfindungsgemäßen Isolierungen wurden dabei in einen Teil des Plattenmaterials vor dem Verpressen Alkoholate in verschiedenen Konzentrationen homogen eingemischt. Die plattenförmigen Prüflinge wurden dann mit 10 kV/50 Hz elektrisch belastet, wobei sich beide Oberflächen in direktem Kontakt mit einer auf 70 °C erwärmten 3%igen Natriumchloridlösung befanden. Die Belastungsdauer betrug 130 Stunden.

Die Versuchsergebnisse zeigen, daß die alkoholathaltigen Plattenprüflinge – unter gleichen Versuchsbedingungen – im Vergleich zu den Prüflingen ohne Alkoholatzusatz weniger bzw. gar keine ECT-Strukturen enthalten. Es ergibt sich ferner auch ein beachtlicher Unterschied in der Größe der ECT-Strukturen. Während nämlich die Längenausdehnung der ECT-Strukturen in Richtung des elektrischen Feldes in den Prüflingen ohne Alkoholatzusatz bis zu 1500 µm beträgt, weisen die alkoholathaltigen Prüflinge ECT-Strukturen unterhalb 500 µm auf.

Im einzelnen ergibt sich – bei Zusätzen von 0,5 bis 1% – beispielsweise folgendes:

| Zusatz | Länge der ECT-Strukturen | relative Anzahl der ECT-Strukturen (bezogen auf Vergleichsversuch) |
|---|---|---|
| – (Vergleichsversuch) | $\leq$ 1500 µm | – |
| Al(i-OC$_3$H$_7$)$_3$ | $\leq$ 500 µm | viel geringer |
| Al(sek.-OC$_4$H$_9$)$_3$ | – | keine |

Es zeigt sich somit, daß die ECT-Bildung bereits bei geringen Alkoholat-Konzentrationen beträchtlich reduziert werden kann. Dies hat den weiteren Vorteil, daß die elektrischen Eigenschaften der Isolierung nicht oder nur unwesentlich beeinflußt werden.

**Patentansprüche**

1. Elektrische Isolierungen auf Polyolefinbasis, insbesondere bei Kabeln und Leitungen, für Mittel- und Hochspannung ab ca. 10 kV mit einem Zusatz zur Verhinderung der Bildung von Wasserbäumchen, dadurch gekennzeichnet, daß sie als Zusatz wenigstens ein Alkoholat von Magnesium, Calcium oder Aluminium enthalten.

2. Elektrische Isolierungen nach Anspruch 1, dadurch gekennzeichnet, daß sie Alkoholate der Zusammensetzung Me(OR)$_x$ enthalten, wobei folgendes gilt:
Me = Mg, Ca oder Al und x = 2 (bei Mg und Ca) oder 3 (bei Al);
R = Alkyl mit 1 bis 24 C-Atomen, Cycloalkyl oder Alkaryl.

3. Elektrische Isolierungen nach Anspruch 1 oder 2, dadurch gekennzeichnet, daß der Anteil des Zusatzes 0,05 bis 10 Gew.-%, insbesondere 0,1 bis 5 Gew.-%, beträgt, bezogen auf das Gesamtgewicht.

4. Kabel oder Leitung für Mittel- und Hochspannung ab ca. 10 kV mit einer einen Zusatz zur Verhinderung der Bildung von Wasserbäumchen enthaltenden elektrischen Isolierung auf Polyolefinbasis, dadurch gekennzeichnet, daß die elektrische Isolierung als Zusatz wenigstens ein Alkoholat von Magnesium, Calcium oder Aluminium enthält.

**Claims**

1. Polyolefin-based electrical insulations, more particularly for cables and leads, for medium and high voltage from approximately 10 kV having an additive to prevent the formation of water trees, characterised in that they contain as an additive at least one alcoholate of magnesium, calcium or aluminium.

2. Electrical insulations according to claim 1, characterised in that they contain alcoholates with the composition Me(OR)$_x$, where the following holds true:
Me = Mg, Ca or Al and x = 2 (in the case of Mg and Ca) or 3 (in the case of Al);
R = alkyl having 1 to 24 C atoms, cycloalkyl or alkaryl.

3. Electrical insulations according to claim 1 or 2, characterised in that the proportion of the additive amounts to 0.05 to 10% by weight, more particularly 0.1 to 5% by weight, as compared with the total weight.

4. Cable or lead for medium and high voltage from approximately 10 kV having a polyolefin-based electrical insulation containing an additive to prevent the formation of water trees, characterised in that the electrical insulation contains as an additive at least one alcoholate of magnesium, calcium or aluminium.

**Revendications**

1. Isolants électriques à base de polyoléfines, notamment pour des câbles et des conducteurs, pour moyenne et haute tension, à partir de 10 kV environ, comprenant un additif pour empêcher la formation d'arborescences d'eau, caractérisés en ce qu'ils contiennent comme additif au moins un alcoolate de magnésium, de calcium, ou d'aluminium.

2. Isolants électriques suivant la revendication 1, caractérisés en ce qu'ils contiennent des alcoolates de composition Me(OR)$_x$ avec:
Me = Mg, Ca ou Al et x = 2 (pour Mg et Ca) ou 3 (pour Al);
R = Alcoyle ayant de 1 à 24 atomes de carbone, cycloalcoyle ou alcaryle.

3. Isolants électriques suivant la revendication 1 ou 2, caractérisés en ce que la proportion de l'additif représente de 0,05 à 10% et notamment de 0,1 à 5% du poids total.

4. Câble ou conducteur pour moyenne et haute tension, à partir de 10 kV environ, comprenant un isolant électrique à base de polyoléfines contenant un additif pour empêcher la formation d'arborescences d'eau, caractérisé en ce que l'isolant électrique contient comme additif au moins un alcoolate de magnésium, de calcium ou d'aluminium.